# EUROPÄISCHE PATENTSCHRIFT

(11) **EP 4 205 719 B1**
(45) Veröffentlichungstag und Bekanntmachung des Hinweises auf die Patenterteilung: **12.03.2025**
(21) Anmeldenummer: 22200086.1
(22) Anmeldetag: 06.10.2022
(51) Int. Cl.: A61G 7/08, A61G 7/05, B60B 33/00, A61G 7/005

(54) **BETT, INSBESONDERE PFLEGE- ODER KRANKENBETT**
BED, IN PARTICULAR NURSING BED OR HOSPITAL BED
LIT, EN PARTICULIER LIT DE SOIN OU LIT D'HÔPITAL

(30) Priorität: 12.10.2021 DE 202021105519 U
(43) Veröffentlichungstag der Anmeldung: 05.07.2023
(73) Patentinhaber: FMB Care GmbH, 33154 Salzkotten (DE)
(72) Erfinder: Ferber, Martin, 33154 Salzkotten (DE); Hoppe, Andrej, 33154 Salzkotten (DE); Liccicardi, Salvatore, 33154 Salzkotten (DE)
(74) Vertreter: Haverkamp Patentanwälte PartG mbB

(56) Entgegenhaltungen:
- EP-A1- 2 537 501
- DE-U1- 202006 002 188
- DE-U1- 202006 019 434
- US-A- 3 879 796
- US-A1- 2016 074 265

## Beschreibung

Gegenstand der Erfindung ist ein Bett, insbesondere Pflege- oder Krankenbett, umfassend einen Liegerahmen, zwei in Längserstreckung des Liegerahmens voneinander beabstandete Bodengruppen mit jeweils zwei in Querrichtung des Liegerahmens voneinander beabstandeten, zumindest jeweils eine Schwenkrolle aufweisenden Rolleneinheiten, sowie umfassend eine Hubeinrichtung zum Anheben und Absenken des Liegerahmens gegenüber den Bodengruppen, welche Hubeinrichtung zwei Hubarme umfasst, wobei jeder Hubarm eine Bodengruppe mit dem Liegerahmen verbindet und gelenkig an die Bodengruppe und den Liegerahmen angeschlossen ist. Die Erfindung ist im unabhängigen Anspruch 1 definiert und weiterhin im beigefügten Anspruchssatz beschrieben.

Betten, insbesondere wenn diese als Pflegebetten oder Krankenbetten ausgelegt sind, verfügen über eine Hubeinrichtung, mit der der Liegerahmen des Bettes gegenüber der bzw. den Bodengruppen hinsichtlich seiner Höhe eingestellt werden kann. Der Liegerahmen trägt typischerweise ebenfalls eine Seitenverkleidung und eine kopf- und fußseitige Verkleidung. Auf der Oberseite des Liegerahmens liegt eine Matratze auf. Der Liegerahmen selbst kann, je nach Auslegung desselben, in unterschiedliche Liege- und Sitzstellungen verstellt werden. Ein solcher Liegerahmen verfügt sodann über Liegerahmensegmente, die entsprechend gelagert und meist über einen motorischen Antrieb gegeneinander verstellt werden können, um die gewünschte Liege- oder Sitzstellung einrichten zu können. Der Liegerahmen ist Teil einer Liegerahmengruppe, die neben dem Liegerahmen die weiteren vorstehend genannten oder auch noch weitere Bestandteile aufweist. Die Höheneinrichtung des Liegerahmens bzw. der Liegerahmengruppe gegenüber der oder den Bodengruppen dient unterschiedlichen Zwecken. Eine angehobene Stellung dient dem Zweck, eine in dem Bett liegende Person in eine Höhe zu bringen, damit Pflegepersonal sich um die Person kümmern kann, ohne sich bücken zu müssen. Wenn eine in dem Bett befindliche Person aus dem Bett aussteigen möchte, wird der Liegerahmen in eine entsprechend geringere Höhe gefahren, damit eine das Bett verlassende oder in das Bett einsteigende Person, wenn seitlich auf der Matratze sitzend, mit beiden Füßen bodenseitig aufstehen kann. Damit eine in dem Bett liegende Person aus diesem nicht herausfallen kann, werden in vielen Fällen Seitengitter verwendet. Mitunter wird dieses von einer in dem Bett liegenden Person, da seitlich umfänglich eingeschlossen, jedoch als unangenehm empfunden. Um diesem Aspekt zu begegnen, sind Betten entwickelt worden, die sich so weit absenken lassen, dass der Liegerahmen mit seiner Unterseite bodenseitig oder fast bodenseitig aufliegt. Dann wird die Höhe bzw. der Abstand der durch die Oberseite der Matratze gebildeten Liegefläche von der Bodenoberfläche nur noch durch die Höhe des Liegerahmens und der Höhe der darauf befindlichen Matratze bestimmt. Diese Gesamthöhe ist jedoch so gering, dass bei einer solchen Stellung des Bettes eine aus dem Bett fallende Person sich nicht verletzen kann. Dann brauchen keine Seitengitter zum Schutze einer in dem Bett befindlichen Person verwendet zu werden.

Ein solches Bett muss nicht nur hinsichtlich seiner Liegefläche höheneinrichtbar, sondern auch insgesamt bewegbar sein. Daher verfügen die beiden Bodengruppen, mit denen das Bett bodenseitig abgestützt ist, jeweils über zwei Rolleneinheiten. Die Rolleneinheiten sind durch einen Querstreb miteinander verbunden. Als Rollen werden, um eine gute Manövrierfähigkeit des Bettes auch bei beengten Raumverhältnissen zu gewährleisten, Schwenkrollen eingesetzt. Zum Arretieren der Position des Bettes sind die Schwenkrollen mit einer Bremsvorrichtung ausgestattet. Zur Verbesserung der Manövrierfähigkeit können diese Schwenkrollen in ihrer Geradeausstellung arretiert werden.

Bei Betten, bei denen die Liegefläche in der abgesenkten Stellung des Liegerahmens möglichst bodennah angeordnet sein soll, werden Schwenkrollen mit einem möglichst geringen Rollendurchmesser eingesetzt, um den Liegerahmen entsprechend weit absenken zu können, vor allem bei solchen Ausgestaltungen, bei denen die Rolleneinheiten unterhalb des Liegerahmens angeordnet sind. Gemäß einem anderen Konzept befinden sich die Rollen aus diesem Grunde nicht unterhalb des Liegerahmens, sondern sind außenseitig bezüglich der Kopf- und Fußteile angeordnet, sodass in der abgesenkten Stellung die Liegerahmengruppe zwischen den Bodengruppen angeordnet ist. Aus GB 2 584 928 A ist ein Bett bekannt, bei dem sich die Bodengruppen mit ihren jeweils zwei Schwenkrollen aufweisenden Rolleneinheiten unterhalb des Liegerahmens befinden. Der Liegerahmen lässt sich bis etwa zum Boden absenken. Zum Bewegen des Bettes und zum Manövrieren desselben sind aufgrund der Schwenkrollen zwei Personen erforderlich, und zwar eine, die das Bett vorderseitig führt und lenkt, und eine zweite, die das Bett schiebt. Beide Personen kontrollieren auf diese Weise die Rollbewegung.

Bei Verwendung einer Hubeinrichtung mit Hubarmen, wie dieses beispielsweise aus GB 2 584 928 A bekannt ist, sind die Hubarme, die zwischen dem Liegerahmen und jeder Bodeneinheit angeordnet sind, hinsichtlich ihrer Neigung für die Höheneinrichtung des Liegerahmens verstellbar. Bei derartigen Hubeinrichtungen kommt es je nach Auslegung der Anlenkung der Hubarme an dem Liegerahmen bei einer Höheneinrichtung der Liegerahmengruppe gegenüber den Bodengruppen zu einer Änderung des Abstandes der Bodengruppen zueinander. Die Folge ist, dass bei einer Höhenverstellung des Liegerahmens das Bett aufgrund der damit einhergehenden Änderung des Abstandes der Bodengruppen voneinander wandern kann. Dieses ist nicht erwünscht. Wenn die Schwenkrollen durch Betätigung der Bremseinrichtung gebremst sind, ist zwar das Bett bodenseitig aufgrund seines Gewichtes ortsfest fixiert. Bei einer Änderung der Höheneinrichtung der Liegefläche wird, wenn die Bodengruppen bei einer Höhenverstellung ihren Abstand zueinander ändern müssen, das Bett dennoch über die Bremswirkung hinaus bewegt, sodass es ruckelt. Die Auslegung eines solchen Bettes hat somit zudem den Nachteil, dass für eine Höhenverstellung die Bremsarretierung der Schwenkrollen gelöst werden muss. Dann ist jedoch ein Wandern des Bettes nicht zu vermeiden.

Ein weiteres gattungsgemäßes Bett ist aus US 2016/0074265 A1 bekannt. Bei diesem vorbekannten Bett ist eine der beiden Bodengruppen mit einer Dualfunktionalität ausgestattet. Diese Bodengruppe verfügt über zwei in Querrichtung des Liegerahmens voneinander beabstandete Rolleneinheiten. Teil jeder Rolleneinheit ist zudem ein Stützkörper. Dieser kann alternativ zu den Schwenkrollen als alternative Bodenabstützung verwendet werden. Sind die Stützkörper ausgefahren, sind die Schwenkrollen von dem Boden abgehoben. Auf diese Weise ist dieses vorbekannte Bett gebremst.

Durch das Anheben der Rollen vom Boden durch Aktivierung der den Rolleneinheiten zugeordneten Stützkörper wird das Bett einseitig etwas angehoben. Dieses kann als nachteilig empfunden werden. Zum Verfahren dieses vorbekannten Bettes werden zwei Personen benötigt, da dieses Bett mit Schwenkrollen ausgerüstet ist.

Ausgehend von diesem diskutierten Stand der Technik liegt der Erfindung daher die Aufgabe zugrunde, ein insbesondere als Pflege- oder Krankenbett ausgelegtes Bett der eingangs genannten Art dergestalt weiterzubilden, dass sich dessen Liegerahmen bzw. Liegerahmengruppe nicht nur in eine sehr bodennahe Position gegenüber den Bodengruppen absenken lässt, ohne dass die Gefahr eines Wanderns des Bettes infolge der Höheneinrichtung besteht, und welches Bett zudem sicher von einer Person bewegt und manövriert werden kann. Zudem soll die Möglichkeit bestehen, möglichst kleindimensionierte Schwenkrollen verwenden zu können.

Gelöst wird diese Aufgabe erfindungsgemäß durch ein eingangs genanntes, gattungsgemäßes Bett, bei dem beide Bodengruppen über eine Dualfunktionalität in Bezug auf die wirksame Bodenabstützung durch Umstellen seiner Einrichtungsstellung verfügen, wobei in einer ersten Einrichtungsstellung die Bodengruppe über die Schwenkrollen ihrer Rolleneinheiten und in ihrer zweiten Einrichtungsstellung über Stützkörper als alternative Bodenabstützung bodenseitig abgestützt ist, wobei die eine Bodengruppe als Stützkörper über Geradeausrollen und die andere Bodengruppe als Stützkörper über Standfüße verfügt.

Bei diesem Bett sind beide Bodengruppen, die zusammen den strukturellen Unterbau des Bettes bilden, mit einer Dualfunktionalität ausgestattet. Dieses bedeutet, dass die Bodengruppe in Abhängigkeit von ihrer Einrichtungsstellung entweder über ihre Schwenkrollen oder über einen oder mehrere Stützkörper als alternative Bodenabstützung bodenseitig abgestützt sind. Aufgrund dieser Dualfunktionalität ist es möglich, Schwenkrollen mit nur einem geringen Durchmesser ihrer Rollen einzusetzen, vor allem solche, die aufgrund ihres geringen Rollendurchmessers über keine Bremseinrichtung verfügen. Diese brauchen auch keine Arretiereinrichtung aufzuweisen, die die Schwenkbarkeit der Rollen blockieren oder beeinträchtigen würde. Infolgedessen können Schwenkrollen eingesetzt werden, die nicht nur eine sehr geringe Aufbauhöhe aufweisen, sondern zudem solche, die, da keine Brems- und Arretiereinrichtungen benötigt werden, sehr einfach in ihrem Aufbau und daher verschleißbeständiger und zudem kostengünstig sind. Die nur geringe benötigte Höhe für die Rolleneinheiten ermöglicht auch die Auslegung des damit ausgerüsteten Bettes, dass sich der Liegerahmen bzw. eine diesen einfassende Verblendung bis zum Boden absenken lässt. Der Abstand der Liegefläche vom Boden ist dann minimiert, kann beispielsweise 15 bis 20 cm betragen. Sinnvoll ist eine solche Möglichkeit der Einrichtung eines Bettes zur Sturzprophylaxe. Die Rolleneinheiten befinden sich auch in der abgesenkten Stellung dann von der Verblendung des Liegerahmens eingefasst, sodass der Eindruck entsteht, das Bett hat keine den Liegerahmen tragende Bodengruppe.

Die herkömmlich den Schwenkrollen notwendigerweise zugeordnete Funktionalität - Bremsen und Schwenkarretierung - wird bei einer solchen Bodengruppe mit Dualfunktionalität dadurch bereitgestellt, dass die bodenseitige Abstützung dieser Bodengruppe, wenn die Schwenkrollen nicht verwendet werden, über einen oder mehrere zusätzliche Stützkörper erfolgt. Der oder die Stützkörper verfügen über die gewünschte Eigenschaft. Beispielsweise kann es sich bei dem oder den Stützkörpern um Geradeausrollen, also: Um nicht schwenkbare Rollen, oder um Standfüße handeln. Eine solche Bodengruppe wird, wenn diese mit Geradeausrollen als Stützkörper ausgerüstet ist, in die gegenüber der Schwenkrollenabstützung alternative Bodenabstützung mit den Geradeausrollen gebracht, wenn die Schwenkbarkeit der Rollen nicht gewünscht wird, wie beispielsweise zum Bewegen und Manövrieren des Bettes mit einer Person, die das Bett dann an der dem anderen Bettende zugehörigen Bodengruppen mit einer Abstützung über die Schwenkrollen schiebt oder zieht. Verfügt eine solche Bodengruppe über einen oder mehrere Standfüße in seiner alternativen Einrichtungsstellung, werden diese verwendet, wenn das Bett ortsfest verbleiben soll. Das Vorsehen einer solchen Bodengruppe mit Dualfunktionalität erlaubt eine Auslegung derselben, dass die Umstellung von der ersten Einrichtungsstellung in die zweite Einrichtungsstellung auch im Falle von mehreren Stützkörpern durch eine einzige Betätigungsbewegung vorgenommen werden kann. Bei einer solchen Auslegung können die Rolleneinheiten ohne weiteres auch mehrere Schwenkrollen, beispielsweise zwei Schwenkrollen tragen, ohne dass der Betätigungsaufwand, der ansonsten bei jeder einzelnen Schwenkrolle, beispielsweise zum Arretieren derselben für eine Geradeausfahrt, erforderlich ist. Vorzugsweise befindet sich an jeder Rolleneinheit einer Bodengruppe ein solcher Stützkörper zusätzlich zu der einen oder den Schwenkrollen. Umfasst eine Rolleneinheit, beispielsweise ein Schwenkrollenpaar, deren Schwenkrollen typischerweise in Längserstreckung des Bettes hintereinander angeordnet sind, befindet sich gemäß einer Ausgestaltung der Stützkörper zwischen diesen. Eine Aktivierung und Deaktivierung der Stützkörper kann beispielsweise über eine den Verstellantrieb zum Verstellen der Stützkörper aus ihrer Benutzungsstellung in ihre Nichtbenutzungsstellung und umgekehrt der beiden Rolleneinheiten verbindende Betätigungsstange erfolgen. Diese verläuft quer zur Längserstreckung des Bettes und ist Teil der Bodengruppe, sodass eine solche ohne weiteres von einer Person mit dem Fuß betätigt werden kann.

Handelt es sich bei den Stützkörpern um Standfüße, durch die das Bett ortsfest abgestützt ist und hat ein solches Bett nur an einer Bodengruppe derartige Stützkörper, kann eine Höhenverstellung des Bettes auch bei solchen Betten, bei denen sich im Zuge einer Höhenverstellung der Abstand der Bodengruppen zueinander ändert, eingerichtet werden, ohne dass das Bett droht zu wandern und vor allem auch ohne vorher eine Bremsarretierung der Schwenkrollen lösen und anschließend wieder festlegen zu müssen.

Durch die Dualfunktionalität ist eine solche Bodeneinheit alternativ über ihre Schwenkrollen oder über den oder die Stützkörper bodenseitig abgestützt.

Zum Verstellen der Stützkörper aus ihrer Nichtbenutzungsstellung in ihre Benutzungsstellung und umgekehrt ist gemäß einem Ausführungsbeispiel vorgesehen, dass die Stützkörper, in vertikaler Richtung translatorisch in einer Führung geführt, verstellbar sind. Die Stützkörper verfügen über einen in die Führung eingreifenden Führungsabschnitt, der an seinem unterseitig aus der Führung hinausragenden Ende dann den eigentlichen Stützkörper, beispielsweise eine Geradeausrolle oder einen Standfuß, trägt. Bewegt werden kann der Stützkörper translatorisch, beispielsweise über einen Kniehebelantrieb. Der gegenüber dem Antriebsarm verschwenkbare Abtriebsarm des Kniehebels wirkt auf eine schwenkbar gelagerte Übertragungswelle und verschwenkt diese bei einer Betätigung des Kniehebelantriebes. Abtriebsseitig trägt die Übertragungswelle einen in radialer Richtung abragenden Mitnehmer, der in eine Mitnehmerausnehmung in dem Stützkörper bzw. seinen Führungsabschnitt eingreift. Darin ist der Mitnehmer in Verstellrichtung des Stützkörpers formschlüssig aufgenommen. Ein solcher Kniehebelantrieb ist vorzugsweise als über einen Totpunkt wirkend ausgelegt. Der Antriebsarm des Kniehebelantriebes ist vorzugsweise unter Ausbildung eines zweiarmigen Hebels verschwenkbar. Der längere Armabschnitt des Antriebsarmes ist derjenige, der benutzerseitig betätigt wird, beispielsweise durch Betätigen einer die Antriebsarme der beiden Rolleneinheiten verbindenden Betätigungsstange.

Die Rolleneinheiten der Bodengruppen können, was in einem Ausführungsbeispiel vorgesehen ist, mit einer oder mehreren Querstreben miteinander verbunden sein.

Die beiden Bodengruppen verfügen über unterschiedliche Stützkörper. Eine Bodengruppe verfügt als Stützkörper über Standfüße. Die andere Bodengruppe weist Geradeausrollen als Stützkörper auf. Ein mit solchen Bodengruppen ausgestattetes Bett vereint die Vorteile der unterschiedlichen Stützkörper, und zwar zum einen das Festsetzen des Bettes und zum anderen eine Geradeausfahrt an einem Bettende. Bei einem solchen Bett kann die Hubeinrichtung, ohne ein Wandern des Bettes in Kauf nehmen zu müssen, dergestalt ausgelegt sein, dass die Hubarme aufgrund ihrer Neigungsverstellung bei einer Höheneinrichtung des Liegerahmens bzw. der Liegerahmengruppe in ihrem Abstand zueinander verändert werden. Ein Wandern des Bettes ist unterbunden, wenn die Bodengruppe mit den Standfüßen über diese bodenseitig abgestützt ist, da durch diese Stellung das Bett ortsfest fixiert ist. Die andere Bodengruppe ist über ihre Geradeausrollen als Stützkörper abgestützt. Eine Querbewegung des Bettes ist daher auch bei dieser Bodengruppe nicht möglich. Auf diese Weise kann der erforderliche Abstandsausgleich bei einer solchen Hubeinrichtung auch zwischen den Bodengruppen vorgenommen werden, ohne dass sich das Bett fortbewegt. Eine Auslegung eines solchen Bettes mit Bodengruppen, deren Abstand sich bei einer Höheneinrichtung des Liegerahmens gegenüber den Bodengruppen ändert, ist vorteilhaft, da dann die Hubarme nur mit einem entsprechend geringeren Verstellbetrag mit ihrem liegegestellseitigen Ende gegenüber dem Liegegestell in dessen Längserstreckung bewegt werden müssen. Entsprechend einfacher kann die Hubeinrichtung ausgelegt werden. Diese benötigt daher nicht notwendigerweise mehrere zusätzliche Lenker, um in einer Stellung, in der der Liegerahmen abgesenkt ist, die Stabilität des Liegerahmens in seiner Abstützung über die Hubarme zu gewährleisten.

Die Hubeinrichtung ist typischerweise zwischen dem Liegerahmen und den Bodengruppen angeordnet. Die Bodengruppen sind typischerweise nicht über ein oder mehrere Längsstreben miteinander verbunden.

Dieselben Vorteile, die vorstehend in Bezug auf eine Höheneinrichtung der Liegefläche gegenüber den Bodengruppen beschrieben sind, ergeben sich auch bei einer Verstellung des Liegerahmens bzw. der Liegerahmengruppe, wenn diese nur einseitig gegenüber einer Bodengruppe hinsichtlich ihrer Höhe verändert wird.

Die Rolleneinheiten jeder Bodeneinheit sind vorzugsweise durch eine Abdeckung verblendet. Jede Rolleneinheit ist vorzugsweise durch eine nach Art eines Gehäuses ausgelegte Verblendung aufgenommen. Diese ist nach unten offen und endet unter Belastung eines Spaltes geringer Weite vor dem Boden, auf dem das Bett aufgestellt ist. Mithin ragt je nach Einstellung der Rolleneinheit unterseitig aus dieser Verblendung eine Schwenkrolle oder ein Stützkörper hervor. Damit treten auch die Stützkörper, wenn den Rolleneinheiten zugeordnet, nicht in Erscheinung.

Nachstehend ist die Erfindung anhand eines Ausführungsbeispiels unter Bezugnahme auf die beigefügten Figuren beschrieben. Es zeigen:
- **Fig. 1:**: Eine schematisierte perspektivische Darstellung eines erfindungsgemäßen Bettes, bodenseitig abgestützt über zwei Bodengruppen,
- **Fig. 2:**: das Bett der Figur 1 mit abgenommenen Abdeckungen der Rolleneinheiten seiner Bodengruppen,
- **Fig. 3a, 3b:**: eine Detaildarstellung der vorderen Rolleneinheit der linken Bodengruppe des Bettes der Figur 2 in seiner ersten Einrichtungsstellung (Figur 3a) und in seiner zweiten Einrichtungsstellung (Figur 3b),
- **Fig. 4a, 4b:**: eine Detaildarstellung der vorderen Rolleneinheit der rechten Bodengruppe des Bettes der Figur 2 in seiner ersten Einrichtungsstellung (Figur 4a) und in seiner zweiten Einrichtungsstellung (Figur 4b) und
- **Fig. 5a, 5b:**: eine vergrößerte Darstellung der Rolleneinheit der Figur 3b in einer perspektivischen Ansicht von der Innenseite (Figur 5a) und aus einer anderen Perspektive von außen (Figur 5b).

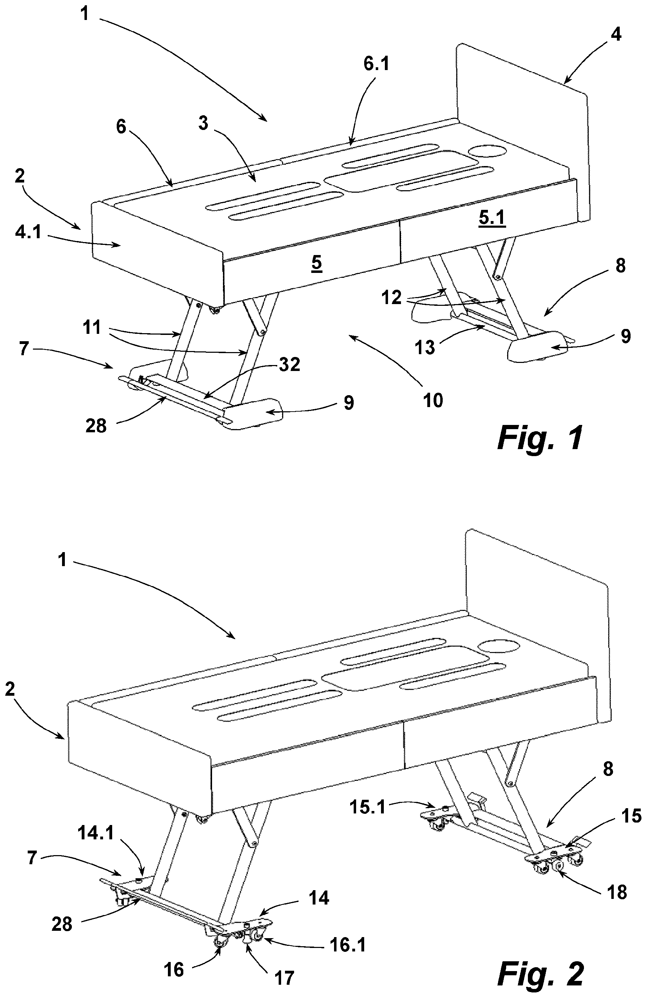

Ein Bett 1 ist als Pflege- bzw. Krankenbett konzipiert. Das Bett 1 verfügt über einen Liegerahmen. Dieser ist Teil einer Liegerahmengruppe 2. Die Liegerahmengruppe 2 verfügt neben dem Liegerahmen, auf dem oberseitig eine Matratze 3 aufliegt, über zwei Kopfteile 4, 4.1 und über Seitenteile 5, 5.1; 6, 6.1. Jeder Längsseite des Bettes 1 sind zwei Seitenteile 5, 5.1; 6, 6.1 zugeordnet, die unabhängig voneinander abgesenkt bzw. ausgezogen sein können. Aufgrund der Verblendung durch die Kopfteile 4, 4.1 und die Seitenteile 5, 5.1; 6, 6.1 ist der Liegerahmen selbst nicht sichtbar. Neben der Liegerahmengruppe 2 verfügt das Bett 1 über zwei Bodengruppen 7, 8. Diese sind in Längserstreckung des Bettes 1 voneinander beabstandet. Über die den strukturellen Unterbau des Bettes 1 bildenden Bodengruppen 7, 8 ist das Bett 1 bodenseitig abgestützt. Die körperliche bodenseitige Abstützung ist durch Abdeckungen 9 sichtseitig verblendet. Der Liegerahmen und damit die Liegerahmengruppe 2 ist unter Zwischenschaltung einer Hubeinrichtung 10 an die Bodengruppen 7, 8 angeschlossen. Diesem Zweck dienen zwei Hubarme 11, 12, die jeweils aus zwei, in Querrichtung des Bettes 1 voneinander beabstandeten Einzelarmen zusammengesetzt sind. Die Hubarme 11, 12 sind gelenkig sowohl an den Liegerahmen als auch an die jeweilige Bodengruppe 7 bzw. 8 angeschlossen. Die Einzelarme der Hubarme 11, 12 sind bodengruppenseitig an einer Strebe 13, 13.1 abgestützt, wie bezüglich der Bodengruppe 8 in Figur 1 erkennbar. Die Hubarme 11, 12 wirken nach Art einer Schere zusammen, um den Liegerahmen und damit die Liegerahmengruppe 2 gegenüber den Bodengruppen 7, 8 hinsichtlich der Höhe der Liegefläche des Bettes 1 einzurichten. Es versteht sich, dass die Hubarme 11, 12 auch unabhängig voneinander in eine unterschiedliche Höheneinrichtung zu der jeweiligen Bodengruppe 7 bzw. 8 gebracht werden können. Für den Antrieb der Hubarme 11, 12 dienen elektromotorische Antriebe. Diese befinden sich unterhalb des Liegerahmens und sind Teil der Liegerahmengruppe 2. Zur Höheneinrichtung der Liegerahmengruppe 2 gegenüber den Bodengruppen 7, 8 wird die Neigung der Hubarme 11, 12 verstellt. Bei dem dargestellten Ausführungsbeispiel wandert bei einem Absenken der Liegerahmengruppe 2 aus der in Figur 1 gezeigten Stellung in eine gegenüber dieser abgesenkten Stellung die liegerahmenseitigen Anschlüsse der Hubarme 11, 12 aufeinander zu. Die Einzelarme der Hubarme 11, 12 sind mit ihren liegerahmenseitigen Enden am Liegerahmen zu diesem Zweck entsprechend geführt. Bei einer solchen Neigungsverstellung der Hubarme 11, 12 ändert sich auch der Abstand der Bodengruppen 7, 8 voneinander. Dieses ist zwar nicht unbedingt erforderlich, jedoch bei dem dargestellten Ausführungsbeispiel der Fall.

Die Bodengruppen 7, 8 verfügen über eine Dualfunktionalität. Dies bedeutet, die Bodengruppen 7, 8 können in zwei unterschiedliche Einrichtungsstellungen bezüglich der gewünschten bodenseitigen Abstützung des Bettes 1 gebracht werden. Jede Bodengruppe 7, 8 verfügt über jeweils zwei Rolleneinheiten 14, 14.1 bzw. 15, 15.1. Jede Rolleneinheit 14, 14.1; 15, 15.1 verfügt bei dem dargestellten Ausführungsbeispiel über zwei Schwenkrollen 16, 16.1. Der Durchmesser der Rollen der Schwenkrollen 16, 16.1 beträgt bei dem dargestellten Ausführungsbeispiel nur 50 mm. In der einen Einrichtungsstellung der Bodengruppen 7, 8 ist das Bett 1 über die Schwenkrollen 16, 16.1 bodenseitig abgestützt. Jede Rolleneinheit 14, 14.1; 15, 15.1 verfügt neben ihren Schwenkrollen 16, 16.1 jeweils über einen weiteren, alternativen Stützkörper. Der Stützkörper der Rolleneinheiten 14, 14.1 der Bodengruppe 7 ist als Standfuß 17 und derjenige der Rolleneinheiten 15, 15.1 der Bodengruppe 8 als Geradeausrolle 18 ausgeführt.

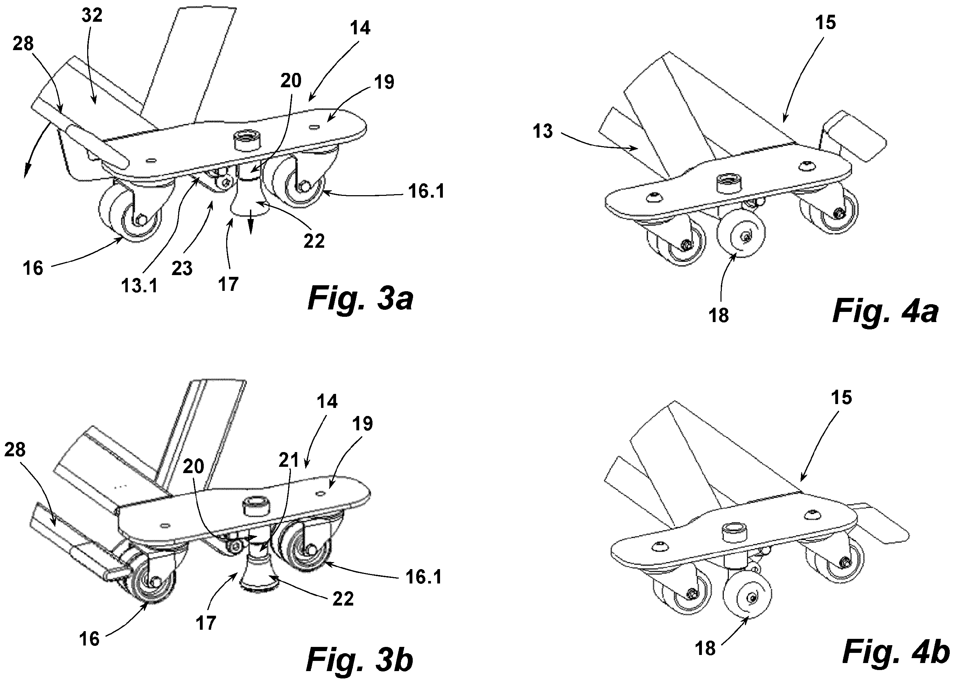

Die alternative Abstützung der Rolleneinheiten 14, 14.1; 15, 15.1 der Bodengruppen 7, 8 ist nachstehend anhand der Rolleneinheiten 14, 15 beschrieben. Jede Rolleneinheit 14 verfügt über einen Rollenträger 19. Dieser ist bei dem dargestellten Ausführungsbeispiel als Platte ausgeführt, an der unterseitig die Schwenkrollen 16, 16.1 angeschlossen sind. Die Schwenkrollen 16, 16.1 sind in Längserstreckung des Bettes 1 voneinander beabstandet. Der als Stützkörper bei der Rolleneinheit 14 dienende Standfuß 17 befindet sich zwischen den Schwenkrollen 16, 16.1. Figur 3a zeigt die Rolleneinheit 14 mit einer bodenseitigen Abstützung über die Schwenkrollen 16, 16.1. Der Standfuß 17 kontaktiert den Boden nicht und befindet sich in seiner Nichtgebrauchsstellung. Der Standfuß 17 ist translatorisch in einer am Rollenträger 19 befestigten Führungshülse 20 verstellbar gehalten. Der Standfuß 17 verfügt über einen rohrförmigen Führungsabschnitt 21 (siehe Figur 3b), mit dem dieser in die Führungshülse 20 eingreift und in translatorischer Richtung darin verstellbar gelagert ist. Zur bodenseitigen Abstützung verfügt der Standfuß 17 über einen Gummistopfen 22 in einer Ausgestaltung, dass seine Aufstandsfläche im Durchmesser größer ist als der Durchmesser des Führungsabschnittes 21.

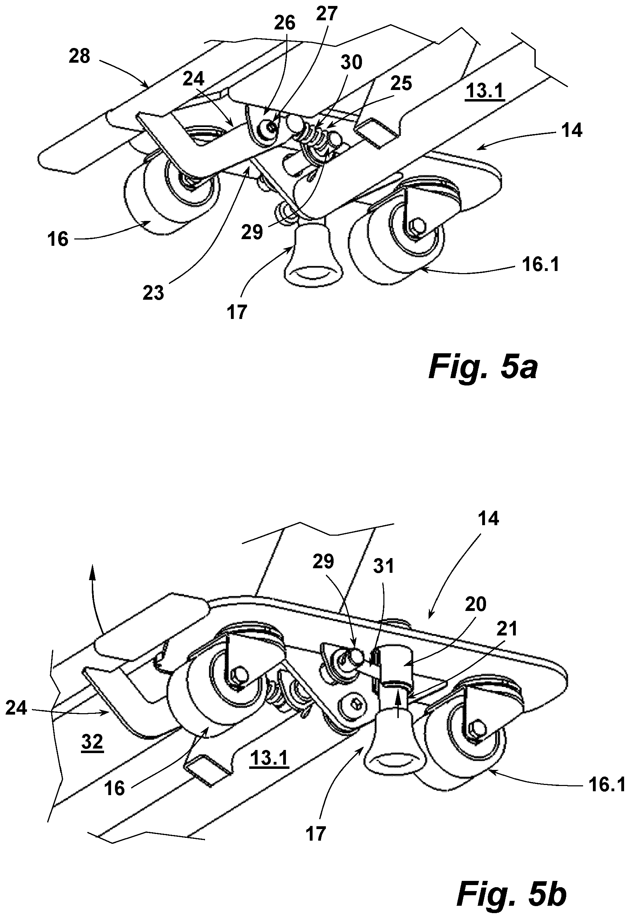

Figur 3b zeigt die Rolleneinheit 14 in ihrer alternativen zweiten Einrichtungsstellung, in der die Schwenkrollen 16, 16.1 vom Boden abgehoben und das Bett 1 sodann über den Standfuß 17 abgestützt ist. Zum Umschalten der bodenseitigen Abstützung zwischen den Schwenkrollen 16, 16.1 und dem Standfuß 17 dient ein Kniehebelantrieb 23, der nachstehend unter Bezugnahme auf Figuren 5a und 5b erläutert wird.

Die Rolleneinheiten 15, 15.1 der Bodengruppe 8, in Figuren 4a, 4b anhand der Rolleneinheit 15 dargestellt, arbeiten in derselben Weise hinsichtlich ihrer Dualfunktionalität wie die Rolleneinheit 14. Figur 4a zeigt die Geradeausrolle 18 in ihrer Nichtbenutzungsstellung, sodass die Rolleneinheit 15 über ihre Schwenkrollen bodenseitig abgestützt ist. In der Darstellung der Figur 4b ist die Geradeausrolle 18 als Stützkörper aktiviert und in ihre Benutzungsstellung gebracht worden, sodass nunmehr eine bodenseitige Abstützung über die Geradeausrolle 18 erfolgt. Die Verstellung der Geradeausrolle 18 erfolgt mittels eines gleichartigen Kniehebelantriebes, wie dieser nachstehend zu der Rolleneinheit 14 beschrieben ist.

Der Kniehebelantrieb 23 (siehe Figur 5a) umfasst einen Antriebsarm 24 und einen Abtriebsarm 25. Der Antriebsarm 24 ist als zweiarmiger Hebel gelagert. Die schwenkbare Anlenkung des Antriebsarms 24 erfolgt an einer von dem Rollenträger nach unten abgekanteten Lasche 26 mittels eines Bolzens 27. Der kürzere Arm des Antriebsarms 24 ist gelenkig an den Abtriebsarm 25 angeschlossen. Der längere Hebelarm des Antriebsarms 24, der denjenigen Arm darstellt, auf den die Betätigungskraft zum Bewirken einer Verstellung der Einrichtung der Rolleneinheiten 14, 14.1 einwirkt, ist an eine Betätigungsstange 28 angeschlossen. Diese verbindet die Antriebsarme 24 der Kniehebelantriebe 23 der beiden Rolleneinheiten 14, 14.1 miteinander.

Der Abtriebsarm 25 des Kniehebelantriebes 23 greift mit seinem abtriebsseitigen Ende in eine in eine schwenkbar gelagerte Übertragungswelle 29 eingebrachte Querbohrung ein. Figur 5a zeigt die Rolleneinheit 14 mit dem in seiner Benutzungsstellung befindlichen Standfuß 17. Wird die Betätigungsstange 28 angehoben, resultiert dieses in einer Schwenkbewegung der Übertragungswelle 29. Durch Einschalten einer den Abtriebsarm 25 umgebenden Druckfeder 30 zwischen der Übertragungswelle 29 und dem abtriebsarmseitigen Ende des Antriebsarms 24 erfolgt eine Verstellung des Standfußes 17 über einen Totpunkt, sodass beide Endstellungen des Kniehebelantriebes 23 stabile Stellungen sind.

Die Übertragungswelle 29 trägt an ihrem anderen Ende einen radial abragenden Mitnehmer 31, der in eine Mitnehmerausnehmung des Führungsabschnittes 21 des Standfußes 17 eingreift, wie dieses aus der Figur 5b erkennbar ist. Ein Anheben der Betätigungsstange 28 führt somit zu einer linksdrehenden Bewegung der Übertragungswelle 29 (siehe Figur 5b), sodass der in den Führungsabschnitt 21 eingreifende Mitnehmer 31 den Standfuß 17 in Richtung zu dem Rollenträger 19, wie durch den Pfeil in Figur 5b angedeutet, hochzieht, bis in der angehobenen Nichtbenutzungsstellung des Standfußes 17 das Bett 1 wieder über die Schwenkrollen 16, 16.1 bodenseitig abgestützt ist.

In Figuren 5a, 5b ist auch die die beiden Rolleneinheiten 14, 14.1 verbindende Strebe 13.1 erkennbar. Verbunden sind die Rolleneinheiten 14, 14.1 zusätzlich durch eine Querstrebe 32 (siehe auch Figuren 1 und 2). In gleicher Weise sind auch die Rolleneinheiten 15,15.1 der Bodengruppe 8 miteinander verbunden.

Bei dem dargestellten Ausführungsbeispiel sind die Rolleneinheiten 15, 15.1 der Bodengruppe 8 individuell bezüglich ihrer Dualfunktionalität einrichtbar. Die beiden Kniehebelantriebe sind bei der Bodeneinheit 8 nicht durch eine Betätigungsstange miteinander verbunden. Ist eine gemeinsame Betätigung in einer Änderung der Einrichtungsstellung der Rolleneinheiten 15, 15.1 gewünscht, können die Kniehebelantriebe dieser Rolleneinheiten 15, 15.1 durch eine Betätigungsstange, wie dieses vorstehend zu den Rolleneinheiten 14, 14.1 der Bodengruppe 7 beschrieben ist, miteinander verbunden sein.

Die Erfindung ist anhand eines Ausführungsbeispiels erläutert worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen näher erläutert werden müsste.

**Bezugszeichenliste**

| | | | |
|---|---|---|---|
| 1 | Bett | 31 | Mitnehmer |
| 2 | Liegerahmengruppe | 32 | Querstrebe |
| 3 | Matratze | | |
| 4, 4.1 | Kopfteil | | |
| 5, 5.1 | Seitenteil | | |
| 6, 6.1 | Seitenteil | | |
| 7 | Bodengruppe | | |
| 8 | Bodengruppe | | |
| 9 | Abdeckung | | |
| 10 | Hubeinrichtung | | |
| 11 | Hubarm | | |
| 12 | Hubarm | | |
| 13, 13.1 | Strebe | | |
| 14, 14.1 | Rolleneinheit | | |
| 15, 15.1 | Rolleneinheit | | |
| 16, 16.1 | Schwenkrolle | | |
| 17 | Standfuß | | |
| 18 | Geradeausrolle | | |
| 19 | Rollenträger | | |
| 20 | Führungshülse | | |
| 21 | Führungsabschnitt | | |
| 22 | Gummistopfen | | |
| 23 | Kniehebelantrieb | | |
| 24 | Antriebsarm | | |
| 25 | Abtriebsarm | | |
| 26 | Lasche | | |
| 27 | Bolzen | | |
| 28 | Betätigungsstange | | |
| 29 | Übertragungswelle | | |
| 30 | Druckfeder | | |

## Patentansprüche

1. Bett, insbesondere Pflege- oder Krankenbett, umfassend einen Liegerahmen, zwei in Längserstreckung des Liegerahmens voneinander beabstandete Bodengruppen (7, 8) mit jeweils zwei in Querrichtung des Liegerahmens voneinander beabstandeten, zumindest jeweils eine Schwenkrolle (16, 16.1) aufweisenden Rolleneinheiten (14, 14.1; 15, 15.1), sowie umfassend eine Hubeinrichtung (10) zum Anheben und Absenken des Liegerahmens gegenüber den Bodengruppen (7, 8), welche Hubeinrichtung (10) zwei Hubarme (11, 12) umfasst, wobei jeder Hubarm (11, 12) eine Bodengruppe (7, 8) mit dem Liegerahmen verbindet und gelenkig an die Bodengruppe (7, 8) und den Liegerahmen angeschlossen ist, **dadurch gekennzeichnet, dass** beide Bodengruppen (7, 8) über eine Dualfunktionalität in Bezug auf die wirksame Bodenabstützung durch Umstellen seiner Einrichtungsstellung verfügen, wobei in einer ersten Einrichtungsstellung diese Bodengruppe (7, 8) über die Schwenkrollen (16, 16.1) ihrer Rolleneinheiten (14, 14.1; 15, 15.1) und in ihrer zweiten Einrichtungsstellung über Stützkörper als alternative Bodenabstützung bodenseitig abgestützt ist, wobei die eine Bodengruppe (8) als Stützkörper über Geradeausrollen (18) und die andere Bodengruppe (7) als Stützkörper über Standfüße (17) verfügt.

2. Bett nach Anspruch 1, **dadurch gekennzeichnet, dass** zur alternativen Bodenabstützung jede Rolleneinheit (14, 14.1; 15, 15.1) zusätzlich zu der zumindest einen Schwenkrolle (16, 16.1) über einen Stützkörper (17, 18) verfügt.

3. Bett nach Anspruch 2, **dadurch gekennzeichnet, dass** die Stützkörper (17, 18) zum Zwecke ihrer Verstellung in einer von jeder Rolleneinheit (14, 14.1; 15, 15.1) getragenen Führung (20) translatorisch bewegbar gehalten sind und zur Verstellung der Stützkörper (17, 18) von ihrer Nichtbenutzungsstellung in ihre Benutzungsstellung und umgekehrt jeweils über einen Kniehebelantrieb (23) unter Überwindung eines Totpunktes vorgesehen ist.

4. Bett nach Anspruch 3, **dadurch gekennzeichnet, dass** der Abtrieb des Kniehebelantriebes (23) auf eine um ihre Längsachse schwenkbar gelagerte Übertragungswelle (29) wirkt, die auf ihrer Abtriebsseite einen in radialer Richtung abragenden Mitnehmer (31) trägt, der wiederum in eine Mitnehmerausnehmung des Stützkörpers (17, 18) eingreift und in Bewegungsrichtung des Mitnehmers (31) formschlüssig darin aufgenommen ist.

5. Bett nach Anspruch 3 oder 4, **dadurch gekennzeichnet, dass** die Antriebsarme (24) der Kniehebelantriebe (23) der beiden Rolleneinheiten (14, 14.1) einer Bodengruppe (7) über eine Betätigungsstange (28) zum gleichzeitigen Betätigen der Kniehebelantriebe (23) der beiden Rolleneinheiten (14, 14.1) miteinander verbunden sind.

6. Bett nach einem der Ansprüche 1 bis 5, **dadurch gekennzeichnet, dass** jede Rolleneinheit (14, 14.1; 15, 15.1) ein Schwenkrollenpaar aufweist und dass zwischen den beiden Schwenkrollen (16, 16.1) dieses Schwenkrollenpaars der verstellbare Stützkörper (17, 18) angeordnet ist.

7. Bett nach einem der Ansprüche 1 bis 6, **dadurch gekennzeichnet, dass** die Schwenkrollen (16, 16.1) einen Rollendurchmesser von weniger als 75 mm, insbesondere einen Durchmesser von 50 mm oder weniger aufweisen.

8. Bett nach Anspruch 7, **dadurch gekennzeichnet, dass** jede Rolleneinheit (14, 14.1; 15, 15.1) durch eine Abdeckung (9) verblendet ist.

9. Bett nach einem der Ansprüche 1 bis 8, **dadurch gekennzeichnet, dass** die beiden Rolleneinheiten (14, 14.1; 15, 15.1) einer Bodeneinheit (7, 8) jeweils durch zumindest eine Querstrebe (32) miteinander verbunden sind.

10. Bett nach einem der Ansprüche 1 bis 9, **dadurch gekennzeichnet, dass** die Hubarme (11, 12) der Hubeinrichtung (10) die Arme einer nach Art einer Schere arbeitenden Hubeinrichtung sind.

11. Bett nach Anspruch 10, **dadurch gekennzeichnet, dass** die Hubarme (11, 12) zum Zwecke der Höhenverstellung des Liegerahmens liegerahmenseitig in Längserstreckung des Liegerahmens verstellbar an diesen dergestalt gelenkig angeschlossen sind, dass bei einer Höhenverstellung des Liegerahmens der Abstand der liegerahmenseitigen Enden der Hubarme (11, 12) sich ändert.

12. Bett nach Anspruch 11, **dadurch gekennzeichnet, dass** bei einer Neigungsverstellung der Hubarme (11, 12) auch der Abstand der Bodengruppen (7, 8) voneinander geändert wird.

## Claims

1. Bed, in particular nursing bed or hospital bed, comprising a reclining frame, two floor groups (7, 8), arranged spaced apart and extending in the longitudinal direction of the reclining frame, in each case at least one pivot roller (16, 16.1) comprising roller units (14, 14.1; 15, 15.1), as well as comprising a lifting device (10) for raising and lowering the reclining frame in relation to the floor groups (7, 8), said lifting device (10) comprising two lifting arms (11, 12), wherein each lifting arm (11, 12) connects a floor group (7, 8) to the reclining frame and is connected in jointed fashion to the floor group (7, 8) and the reclining frame, **characterised in that** both floor groups (7, 8) are provided with a dual functionality with regard to the effective floor support by switching over its device position setting, wherein, in a first device position setting, this floor group (7, 8) is supported on the floor side by the pivot rollers (16, 16.1) of its roller units (14, 14.1; 15, 15.1), and in its second device position setting is supported by support bodies as alternative floor support, wherein the one floor group (8) as a support body is provided by means of straight-ahead rollers (18), and the other floor group (7) is provided with standing feet (17) as support bodies.

2. Bed according to claim 1, **characterised in that,** for the alternative floor support, each roller unit (14, 14.1; 15, 15.1) is provided, in addition to the at least one pivot roller (16, 16.1), with a support body (17, 18).

3. Bed according to claim 2, **characterised in that,** for the purpose of their adjustment movement, the support bodies (17, 18) are held such as to be capable of translational movement in a guide element (20) carried by each roller unit (14, 14.1; 15, 15.1), and, for the adjustment movement of the support bodies (17, 18) out of their nonuse position into their position of use and vice-versa, in each case a knee-lever drive (23) is provided in order to overcome a dead-point.

4. Bed according to claim 3, **characterised in that** the power takeoff from the knee-lever drive (23) takes effect on a transfer shaft (29) which is mounted on bearings such as to pivot about its longitudinal axis, which carries a driver element (31) projecting in a radial direction on its power takeoff side, which in turn engages in a driver element cut-out opening of the support body (17, 18) and in the direction of movement of the drive element (31) is accommodated in this in positive fit.

5. Bed according to claim 3 or 4, **characterised in that** the drive arms (24) of the knee-lever drive (23) of the two roller units (14, 14.1) of a floor group (7) are connected to one another by an actuation rod (28) for the simultaneous actuation of the knee-lever drives (23) of the two roller units (14, 14.1).

6. Bed according to any one of claims 1 to 5, **characterised in that** each roller unit (14, 14.1; 15, 15.1) comprises a pivot roller pair, and that the adjustable support body (17, 18) is arranged between the two pivot rollers (16, 16.1) of this pivot roller pair.

7. Bed according to any one of claims 1 to 6, **characterised in that** the pivot rollers (16, 16.1) have a roller diameter of less than 75 mm, in particular a diameter of 50 mm or less.

8. Bed according to claim 7, **characterised in that** each roller unit (14, 14.1; 15, 15.1) is screened by a cover (9).

9. Bed according to any one of claims 1 to 8, **characterised in that** the two roller units (14, 14.1; 15, 15.1) of a floor unit (7, 8) are connected to one another in each case by at least one transverse bracing element (32).

10. Bed according to any one of claims 1 to 9, **characterised in that** the lifting arms (11, 12) of the lifting device (10) are the arms of a lifting device operating in scissors fashion.

11. Bed according to claim 10, **characterised in that,** for the purpose of adjusting the height of the reclining frame, the lifting arms (11, 12) are adjustably connected to the reclining frame on the reclining frame side, in its longitudinal extension, by a jointed connection, in such a way that, during a height adjustment of the reclining frame, the distance interval changes between the ends of the lifting arms (11, 12) on the reclining frame side.

12. Bed according to claim 11, **characterised in that,** during an inclination adjustment of the lifting arms (11, 12), the distance interval of the floor groups (7, 8) from one another also changes.

## Revendications

1. Lit, en particulier lit de soins ou lit d'hôpital, comportant un cadre de couchage, deux ensembles au sol (7, 8) espacés l'un de l'autre dans l'étendue longitudinale du cadre de couchage, munis chacun de deux unités de roulement (14, 14.1 ; 15, 15.1) espacées l'une de l'autre perpendiculairement au cadre de couchage, équipées chacune d'au moins une roulette pivotante (16, 16.1), et comportant un dispositif de levage (10) destiné à soulever et abaisser le cadre de couchage par rapport aux ensembles au sol (7, 8), lequel dispositif de levage (10) comporte deux bras de levage (11, 12), chaque bras de levage (11,12) reliant l'ensemble au sol (7, 8) au cadre de couchage par une liaison articulée avec l'ensemble au sol (7, 8) et le cadre de couchage, **caractérisé en ce que** les deux ensembles au sol (7, 8) disposent d'une double fonctionnalité visant à assurer, grâce à une commutation de sa position d'agencement, un appui efficace au sol, cet ensemble au sol (7, 8) étant, dans une première position d'agencement, en appui au sol par les roulettes pivotantes (16, 16.1) de ses unités de roulement (14, 14.1 ; 15, 15.1) et étant, dans sa seconde position d'agencement, en appui alternatif au sol par des éléments d'appui, l'un des ensembles au sol (8) disposant, en guise d'élément d'appui, de roulettes fixes (18) et l'autre ensemble au sol (7) disposant, en guise d'élément d'appui, de pieds d'appui (17).

2. Lit selon la revendication 1, **caractérisé en ce que**, pour un appui alternatif au sol, chaque unité de roulement (14, 14.1 ; 15, 15.1) dispose, en plus de l'au moins une roulette pivotante (16, 16.1), d'un élément d'appui (17, 18).

3. Lit selon la revendication 2, **caractérisé en ce que**, pour assurer leur commutation, les éléments d'appui (17, 18) sont maintenus, de manière à pouvoir être déplacés en translation, dans un guidage (20) supporté par chaque unité de roulement (14, 14.1 ; 15, 15.1) et qu'il est respectivement prévu, afin de commuter les éléments d'appui (17, 18) de leur position de non-utilisation à leur position d'utilisation et vice versa, un mécanisme à genouillère (23) devant dépasser un point mort.

4. Lit selon la revendication 3, **caractérisé en ce que** le mécanisme de la genouillère (23) agit sur un arbre de transmission (29) logé de manière pivotante sur son axe longitudinal, lequel supporte sur son côté d'entraînement un toc d'entraînement (31) en saillie dans le sens radial, lequel s'engage à son tour sur l'élément d'appui (18, 18), dans un évidement pour toc d'entraînement, et est logé par complémentarité de forme dans ce dernier, dans le sens de déplacement du toc d'entraînement (31).

5. Lit selon la revendication 3 ou 4, **caractérisé en ce que** les bras d'entraînement (24) des mécanismes à genouillère (23) des deux unités de roulement (14, 14.1) d'un ensemble au sol (7) sont raccordés l'un à l'autre par une tige de manœuvre (28), afin d'actionner simultanément les mécanismes à genouillère (23) des deux unités de roulement (14, 14.1).

6. Lit selon l'une des revendications 1 à 5, **caractérisé en ce que** chaque unité de roulement (14, 14.1 ; 15, 15.1) présente une paire de roulettes pivotantes et que l'élément d'appui (17, 18) commutable est disposé entre les deux roulettes pivotantes (16, 16.1) de cette paire de roulettes pivotantes.

7. Lit selon l'une des revendications 1 à 6, **caractérisé en ce que** les roulettes pivotantes (16, 16.1) présentent un diamètre de roulette de moins de 75 mm, en particulier un diamètre de 50 mm ou moins.

8. Lit selon la revendication 7, **caractérisé en ce que** chaque unité de roulement (14, 14.1 ; 15, 15.1) est masquée par un capot (9).

9. Lit selon l'une des revendications 1 à 8, **caractérisé en ce que** les deux unités de roulement (14, 14.1 ; 15, 15.1) d'un ensemble au sol (7, 8) sont reliées l'une à l'autre par au moins une traverse (32).

10. Lit selon l'une des revendications 1 à 9, **caractérisé en ce que** les bras de levage (11, 12) du dispositif de levage (10) sont les bras d'un dispositif de levage travaillant à la manière de ciseaux.

11. Lit selon la revendication 10, **caractérisé en ce que**, pour assurer le réglage en hauteur du cadre de couchage, les bras de levage (11, 12) sont raccordés au cadre de couchage par une articulation réglable dans le sens de l'étendue longitudinale du cadre de couchage, de telle sorte qu'à l'occasion d'un réglage en hauteur du cadre de couchage, l'intervalle entre les extrémités des bras de levage (11, 12), situées du côté du cadre de couchage, se modifie.

12. Lit selon la revendication 11, **caractérisé en ce que** l'intervalle entre les ensembles au sol (7, 8) est également modifié lors d'un réglage de l'inclinaison des bras de levage (11, 12).
